# EUROPÄISCHE PATENTSCHRIFT

(11) **EP 1 208 730 B1**
(45) Veröffentlichungstag und Bekanntmachung des Hinweises auf die Patenterteilung: **01.02.2006**
(21) Anmeldenummer: 01128137.5
(22) Anmeldetag: 27.11.2001
(51) Int. Cl.: A01B 45/02, A01B 61/02

(54) **Bodenbearbeitungsgerät mit Dämpfer**
Soil working implement with damper
Outil pour le travail du sol avec amortisseur

(30) Priorität: 27.11.2000 DE 20020018 U
(43) Veröffentlichungstag der Anmeldung: 29.05.2002
(73) Patentinhaber: Wiedenmann GmbH, 89192 Rammingen (DE)
(72) Erfinder:
(74) Vertreter: Kastel, Stefan

(56) Entgegenhaltungen:
- FR-E- 73 963
- GB-A- 1 600 845
- GB-A- 2 225 692
- US-A- 4 147 376
- US-A- 4 566 543

## Beschreibung

Die Erfindung betrifft ein Bodenbearbeitungsgerät mit den Merkmalen des Oberbegriffes des hier beigefügten Anspruches 1, wie es aus der GB-A-2 225 692 bekannt ist.

Diese Druckschrift betrifft eine mobile Grasnaben-Bohrmaschine. Zum Belüften des Bodens werden hier Bohrwerkzeuge mit Schraubgewinde eingesetzt, die drehend angetrieben in den Boden eingebaut werden. Dieses Einbohren bedarf einer gewissen Zeit. Um ein Zugfahrzeug während dieser Zeit nicht anhalten zu müssen, wird bei einer Ausführungsform vorgeschlagen, das Gerät an federelastisch verformbaren Elementen sowohl an einem Oberlenker als auch an einem Unterlenker am Zugfahrzeug anzuschließen. Während des Bohrvorganges kann so das Gerät am Ort verbleiben, während die weitere Bewegung des Zugfahrzeuges ein in die Länge Ziehen der elastisch verformbaren Elemente bewirkt. Der Auszugweg der elastisch verformbaren Elemente ist ausreichend, um einen vollständigen Arbeitszyklus der Bohrköpfe - Eindrehen und Ausdrehen - zuzulassen, so dass dann, wenn alle Bohrer wieder aus dem Boden befreit sind, die federelastischen Elemente einen Rückschlag des Gerätes zu dem Zugfahrzeug hin bewirken. Das Vorsehen elastischer Elemente bewirkt bei dem bekannten Gerät somit bereits während eines Normalbetriebes Stöße.

Bei der Erfindung geht es hingegen um ein an ein Zugfahrzeug anzuschließendes und damit über eine Bodenfläche verfahrbar geführtes Bodenbearbeitungsgerät mit im wesentlichen in einer Stoßrichtung in den Boden einführbaren Einstechwerkzeugen (Spoons) unter Durchstoßung der Oberfläche, beispielsweise Grasnabe, des zu bearbeitenden Bodens. Bei bekannten Geräten dieser Art - beispielsweise EP 0 452 449 und WO98/05191 - wird eine Bodenauflockerung vornehmlich mit dem Ziel einer Drainierung erreicht, die sich dadurch auszeichnet, dass die Einstechöffnung des einzelnen Werkzeuges in der Oberfläche bzw. Grasnabe kleiner ist als der in die Tiefe gesehen geschaffene Bodenhohlraum. Wie in den vorgenannten Veröffentlichungen, auf die besonders Bezug genommen wird, dargelegt ist, werden die Einstechwerkzeuge an chassisfest verschwenkbar gelagerten Armen gehalten, die durch einen motorgetriebenen Kurbeltrieb in auf- und abgehende Verschwenkbewegungen versetzt werden. Dabei sind in der Regel mehrere solcher an ihren freien Enden Stechwerkzeuge tragende Arme vorgesehen, deren jeder mehrere Einstechwerkzeuge aufweisen kann. Diese Einstechwerkzeuge können unterschiedliche Längen und Durchmesser aufweisen und sind von daher regelmäßig auswechselbar. Solche Bodenbearbeitungen sind insbesondere bei Sportflächen, vornehmlich Golfplätzen, bedeutsam, bei denen die Oberfläche - Grasnabe - durch die Bearbeitung möglichst wenig "gestört" werden soll. Andere Bodenauflockerungsgeräte etc. arbeiten mit Stachelwalzen, bei denen die durch die Stachel verursachten Eindringöffnungen in die Oberfläche/Grasnabe des bearbeiteten Bodens größer sind als die Öffnungsweite in Richtung der Bodentiefe gesehen.

Je nach Bodenbeschaffenheit unterhalb der Grasnabe und je nach Einstechtiefe der Einstechwerkzeuge in den Boden können diese mehr oder weniger oft auf Steine und dergleichen den Werkzeugdurchtritt verhindernde Gegenstände treffen, die einem Eindrücken tiefer in den Boden Widerstand entgegensetzen, so dass ein schlagartiges Auffangen des in den Boden eindringenden Werkzeugs erfolgt, welche Schlagbelastung sich auf das Bodenbearbeitungsgerät in seiner Gesamtheit auswirkt. Über die Ankupplung an das Zugfahrzeug pflanzt sich dieser Schlag auch in Form eines Drehmomentes weiter, so dass die Fahrzeugbewegung insgesamt unruhig wird.

Mit der Erfindung soll dieser schlagartig beeinträchtigte Lauf des Zugfahrzeuges ruhiger gestaltet werden.

Dies wird durch ein Bodenbearbeitungsgerät mit den Merkmalen des Anspruchs 1 gelöst.

Vorteilhafte Ausgestaltungen der Erfindung sind Gegenstand der Unteransprüche.

Erfindungsgemäß ist in den Anschluss zwischen dem Bodenbearbeitungsgerät und dem Zugfahrzeug wie beansprucht ein federelastisch verformbares Element (Puffer) eingesetzt, das die bei Eindringen der Stechwerkzeuge in den Boden auf nicht durchstoßbare und/oder ausweichende Gegenstände (Steine etc.) auftretenden Stoßbelastungen im Übergang auf das Zugfahrzeug dämpft.

In erfindungsgemäßer Ausführung ist die Verbindung zwischen dem Bodenbearbeitungsgerät und dem Zugfahrzeug als Dreipunktanschluss - zugfahrzeugseitig Oberlenker und Unterlenker oder Zugdeichsel - ausgebildet und das wenigstens eine federelastische Element ist in den Druck- oder Zugkraftweg dieses Anschlusses verformbar eingesetzt. Bei Einbau des Federelementes in den Oberlenkeranschluss der Dreipunktanhängung dient der Unterlenkeranschluss oder auch Deichselanschluss als Drehpunkt für die von dem abgefangenen Einstechwerkzeug auf das Chassis des Bodenbearbeitungsgerätes ausgeübte Kraftkomponente - Drehmoment, das auf das Federglied wirkt.

Insbesondere ist das federelastisch verformbare Element eine Feder, vor allem eine Schraubenfeder, die wiederum bevorzugt als Druckfeder ausgebildet ist. Die Druckfeder kann grundsätzlich durch eine teleskopartige Umhüllung gegen Ausbrechen geführt sein, vorzugsweise ist sie von einem Führungsbolzen durchgriffen, der gegenüber einem der stirnseitig benachbarten Teile, zwischen denen die Feder wirkend angeordnet ist, verschoben werden kann.

Aus sicherheitstechnischen Gründen werden Schraubendruckfedern bevorzugt, grundsätzlich sind auch Zugfedern denkbar. Anstelle von solchen Federn können auch Dämpfungskörpern verwendet werden. Schließlich kann man auch solche Federn mit Dämpfungskörper in Form von Scheiben oder dergleichen verbinden, um die Federcharakteristik zu modifizieren und insbesondere Prellerscheinungen zu verringern.

In konstruktiv bevorzugter Ausbildung wird das oberlenkerseitige Anschlussglied des Gerätes einerseits über ein bewegliches Portal an dem Chassis direkt gehalten und andererseits über das zwischengeschaltete federelastisch verformbare Element an dem Chassis abgestützt.

Ein bevorzugtes Ausführungsbeispiel ist in der anliegenden Zeichnung dargestellt und wird nachfolgend beschrieben:

Das Ausführungsbeispiel beruht auf einem Bodenbearbeitungsgerät der eingangs genannten Art und ist insgesamt mit 1 bezeichnet. Es weist ein Chassis 2 auf, das über einen Dreipunktanschluss bzw. eine Dreipunktanhängung mit einem nicht dargestellten Fahrzeug verbunden ist und das sich mit einer Stützwalze 3 gegenüber dem Boden abstützt. An dem Chassis 2 ist ein insgesamt mit 4 bezeichneter Kurbeltrieb gehalten, der über einen nicht dargestellten Gelenkwellen-Zapfwellenanschluss von dem nicht dargestellten Zugfahrzeug aus derart angetrieben wird, dass die an dem Chassis 2 verschwenkbar angelenkten Arme 5 jeweils von einer Kurbelstange des Kurbeltriebes 4 in einer vertikalen in Fahrtrichtung verlaufenden Ebene, auf- und abgehend angetrieben sind. Jeweils am freien Ende dieser Arme sind Einstechwerkzeuge 6 gehalten, die in den befahrenen Boden unter einem vorgegebenen Winkel einstechen, so dass sich Öffnungen zur Auflockerung in dem Boden ergeben. Das vorliegende Beispiel zeigt noch zwischen der Stützwalze 3 und den Einstechwerkzeugen 6 ein Striegelwerkzeug 7 zur Bearbeitung des Bodens wie Filzentfernung etc. Bei 8 ist ein Antriebsgetriebe für den Kurbeltrieb angedeutet und bei 9 eine haubenartige Geräteabdeckung. Im übrigen wird auf die eingangs genannten Druckschriften verwiesen, in denen solche Bodenbearbeitungsgeräte im einzelnen geschildert sind.

Stellen sich den in dem Boden eindringenden Stechwerkzeugen vor Erreichen der größten Einstechtiefe nicht durchstoßbare und nicht verdrängbare Widerstände wie insbesondere Steine entgegen, dann werden die Einstechwerkzeuge schlagartig in ihrer Einstechbewegung abgefangen, wodurch sich eine stoßartige Belastung auf das Chassis 2 ergibt, das somit stoßartig angehoben wird und diesen Stoß über die Dreipunktanhängung an das Zugfahrzeug weitergibt. Um dies zu vermeiden, wird in die über die Dreipunktaufhängung verlaufende Druckkraft oder Zugkraft ein Dämpfungsglied in Form einer Feder oder eines Dämpfungskörpers eingeschaltet, wodurch der dieses Dämpfungsglied nicht enthaltende Lenker der Dreipunktaufhängung jeweils als Drehpunkt für das über die abgefangenen Stechwerkzeuge ausgeübte Drehmoment bildet. Im vorliegenden Falle ist ein solches federelastisches Element als Dämpfungsglied in den geräteseitigen Anschluss für den Oberlenker der Drehpunktaufhängung eingebaut.

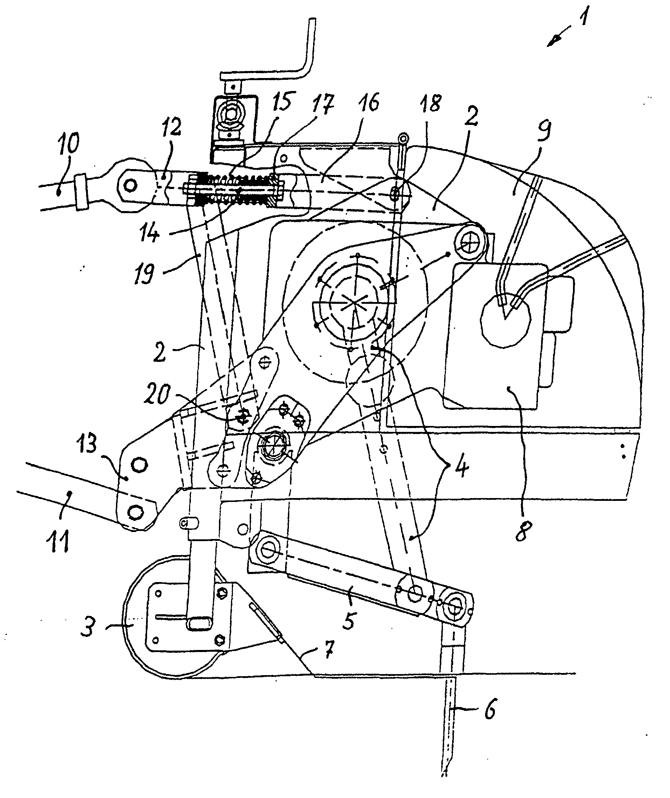

In der beiliegenden Zeichnung ist ein Ausführungsbeispiel wiedergegeben, das als Dämpfer eine Druckfeder im Bereich des Oberlenkeranschlusses zeigt.

Die von dem nicht dargestellten Zugfahrzeug ausgehenden Anhängeglieder sind hier ein Oberlenker 10 und in der Regel zwei Unterlenker 11. Diese Lenker können auch nach Art von Deichseln ausgebildet sein. Der fahrzeugseitige Oberlenker 10 ist an ein geräteseitiges Oberlenker-Anschlussglied angekoppelt, während die fahrzeugseitigen Unterlenker 11 an geräteseitige Unterlenker-Anschlussglieder 13 angekoppelt sind. Diese Anschlussglieder 13 sind mit dem Chassis 2 verbunden bzw. ein Teil dieses Chassis. Das Oberlenker-Anschlussglied 12 ist mit einem Abstützglied 16 über einen Führungsbolzen 14 teleskopartig verschiebbar verbunden, und zwischen den einander zu gewandten Enden dieser Glieder ist eine Schraubendruckfeder 15 eingesetzt, die von dem Führungsbolzen 14 durchgriffen ist. Dadurch lassen sich die Glieder 12 und 16 in fluchtender Ausrichtung aufeinander gegen die Kraft der Feder 15 verschieben. Die Feder ist über scheibenförmige Unterlagen 17 an den einander zu gewandten Enden der Glieder 12 und 16 jeweilig stirnseitig abgestützt. Eine oder beide dieser scheibenförmigen Unterlagen können als Dämpfungselemente ausgebildet sein. Im übrigen kann anstelle der Schraubendruckfeder 15 insgesamt ein federelastischer Dämpfungskörper anderen Werkstoffes und anderer Formgebung eingesetzt werden. Das Oberlenker-Anschlussglied 12 ist über die Schraubenfeder 15 und das Abstützglied 16 an dessen abgewandtem Ende bei 18 an das Chassis 2 angeschlossen. Des weiteren ist das Oberlenker-Anschlussglied über ein bewegliches Portal 19 bei 20 mit dem Chassis 2 gelenkig verbunden.

Schlägt das Einstechwerkzeug 6 im Zuge des Einstechvorganges auf ein insoweit unverrückbares Hindernis, so wird das weitere Eindringen des Werkzeuges 6 schlagartig verhindert, so dass unter der Wirkung des Kurbeltriebs eine stoßartige Aufwärtsbewegung des Chassis 2 erfolgt, das sich unter dieser Stoßbelastung um den Ankoppelpunkt zwischen den Unterlenkem 11 und den zugehörigen Anschlussgliedem 13 verdreht. Diese Drehbewegung bedingt eine auf das nicht gezeigte Zugfahrzeug bzw. dessen Oberlenker 10 hin gerichtete Bewegung des Abstützgliedes 16, das sich unter Zusammendrücken der Druckfeder 15 und gegebenenfalls der Unterlage 17 auf das Oberlenker-Anschlussglied 12 hin verschiebt. Die sich damit zusammenpressende Feder 15 wirkt als Dämpfungsglied und verhindert, dass bei dieser stoßartigen Verschwenkbewegung des Chassis 2 gegenüber den als Drehpunkt wirkenden Koppelpunkten der Unterlenker 13 der Stoß unvermindert an den Oberlenker und damit das Fahrzeug weitergeleitet wird.
- 1: Bodenbearbeitungsgerät
- 2: Chassis
- 3: Stützwalze
- 4: Kurbeltrieb
- 5: Arm - chassisfest verschwenkbar gelagert
- 6: Einstechwerkzeug(e)
- 7: Striegel
- 8: Antriebsgetriebe
- 9: Abdeckung
- 10: Oberlenker oder Zugdeichsel
- 11: Unterlenker (paar) oder Zugdeichsel
- 12: Oberlenker - Anschlussglied
- 13: Unterlenker - Anschlussglied
- 14: führender Bolzen
- 15: Schraubendruckfeder
- 16: Abstützglied
- 17: Dämpfungsunterlage
- 18: Abstützung an Chassis
- 19: bewegliches Portal
- 20: Gelenkabstützung an Chassis

## Patentansprüche

1. An ein Zugfahrzeug anzuschließendes und damit über eine Bodenfläche verfahrbar geführtes Bodenbearbeitungsgerät (1) mit im wesentlichen in einer Stoßrichtung angetriebenen (4, 5) im Zuge der Fahrbewegung rhythmisch in den Boden einführbaren Werkzeugen (6) unter Durchstoßung der Bodenfläche, insbesondere Grasnabe, und Schaffung von Bodenöffnungen innerhalb des zu bearbeitenden Bodens,
wobei in den Anschluss zwischen dem Bodenbearbeitungsgerät (1) und dem Zugfahrzeug ein federelastisch verformbares Element (15; 17) eingesetzt ist,
wobei die Verbindung zwischen dem Bodenbearbeitungsgerät (1) und dem Zugfahrzeug als Dreipunktanschluss mit zum Zugfahrzeug hin Oberlenker (10) und Unterlenker (11) oder Zugdeichsel ausgebildet ist
und wobei das federelastische Element (15; 17) in dem Druck- oder Zugkraftweg dieses Anschlusses verformbar eingesetzt ist,
**dadurch gekennzeichnet,**
**dass** die Werkzeuge Einstechwerkzeuge (6) in Form von Zinken oder Spoons sind und
**dass** das federelastisch verformbare Element (15, 17), das die bei Eindringen der Stechwerkzeuge (6) in den Boden auf nicht durchstoßbare und/oder ausweichende Gegenstände sowie Steine etc. auftretenden Stoßbelastungen im Übergang auf das Zugfahrzeug dämpft, lediglich zwischen das Gerätechassis (2) und das geräteseitige Oberlenker-Anschlussglied eingeschaltet ist, so dass der Unterlenkeranschluss oder Deichselanschluss als Drehpunkt für eine von dem abgefangenen Einstechwerkzeug (6) auf das Gerätechassis ausgeübte Kraftkomponente dient, die so als Drehmoment auf das Federelement wirkt.

2. Gerät nach Anspruch 1,
**dadurch gekennzeichnet,**
**dass** das federelastisch verformbare Element eine Feder, insbesondere Schraubenfeder (15), umfasst.

3. Gerät nach Anspruch 2,
**dadurch gekennzeichnet,**
**dass** die Schraubenfeder als Druckfeder (15) ausgebildet und insbesondere von einem Führungsbolzen (14) durchgriffen ist, der gegenüber einem der stirnseitig benachbarten Teile (12, 16) verschiebbar ist.

4. Gerät nach einem der Ansprüche 1 bis 3,
**dadurch gekennzeichnet,**
**dass** das federelastisch verformbare Element einen Dämpfungskörper umfasst.

5. Gerät nach einem der Ansprüche 1 bis 4,
**dadurch gekennzeichnet,**
**dass** das geräteseitige Oberlenker- bzw. Deichsel- Anschlussglied (12) einerseits über ein bewegliches Portal (19) an dem Chassis (2) direkt gehalten und andererseits über das zwischengeschaltete federelastisch verformbare Element (15) an dem Chassis abgestützt ist.

## Claims

1. Agricultural implement (1) that is to be connected to a tractor, and can thus move over a land area, comprising tools (6) substantially driven (4, 5) in an impact direction and which can be rhythmically introduced into the ground during the course of the travelling movement with penetration of the land area, in particular sod, and creating openings in the ground within the soil to be worked, an elastically deformable element (15; 17) being inserted in the connection between the agricultural implement (1) and the tractor, the connection between the agricultural implement (1) and the tractor being constructed as a three-point connection having an upper (10) and a lower (11) connecting rod or a draw bar toward the tractor, and the elastic element (15; 17) being deformably inserted in the pressure or tractive power path of this connection,
**characterised in that** the tools are plunging tools (6) in the form of prongs or spoons, and **in that** the elastically deformable element (15, 17) which, during transfer to the tractor, absorbs impact stresses that occur when, during penetration of the plunging tools (6) into the soil, said tools encounter non-penetrable and/or non-resilient objects such as stones, etc., is only connected between the implement chassis (2) and the implement-side upper connecting rod connecting member, so that the lower connecting rod connection or draw bar connection is used as a pivot for a force component, which thus acts as a torque on the spring element, exerted by the cushioned plunging tool (6) on the implement chassis.

2. Implement according to Claim 1, **characterised in that** the elastically deformable element comprises a spring, in particular a helical spring (15).

3. Implement according to Claim 2, **characterised in that** the helical spring is constructed as a compression spring (15) and in particular is penetrated by a guide pin (14) which is displaceable with respect to one of the parts (12, 16) adjacent at the end face.

4. Implement according to any one of Claims 1 to 3, **characterised in that** the elastically deformable element comprises an absorbing body.

5. Implement according to any one of Claims 1 to 4, **characterised in that** the implement-side upper connecting rod or draw bar connecting member (12) is, on the one hand, directly held on the chassis (2) by a movable portal (19) and, on the other hand, is supported on the chassis by the interposed elastically deformable element (15) .

## Revendications

1. Appareil pour le travail du sol (1) qui peut être attelé à un tracteur et donc déplacé sur le sol, et qui comporte des outils entraînés essentiellement dans une direction de choc au cours du déplacement tracté, en pouvant pénétrer dans le sol de manière rythmée en traversant la surface du sol, notamment le petit gazon, avec création d'ouvertures dans le sol à travailler, étant précisé que l'attelage de l'appareil de travail du sol (1) au tracteur comporte un élément (15 ; 17) déformable élastiquement, la liaison entre l'outil (1) au le tracteur étant une liaison à trois points avec, du côté du tracteur, un bras oscillant supérieur (10) et un bras oscillant inférieur (11) ou une barre d'attelage, l'élément élastique (15 ; 17) étant monté de manière à pouvoir se déformer dans le sens de traction ou de compression de ce raccordement,
**caractérisé en ce que**
- les outils sont des outils de plongée (6) en forme de pointes ou de cuillères,
- l'élément (15 ; 17) déformable élastiquement, qui amortit dans leur transmission au tracteur les contraintes de choc produites quand les outils de plongée (6) pénétrant dans le sol rencontrent des objets qui ne peuvent être traversés et/ou ont un effet déviant (pierres, etc.), est simplement un organe de raccordement monté entre le châssis d'appareil (2) et le bras supérieur situé du côté de l'outil, de sorte que le raccord du bras inférieur ou le raccord de la barre d'attelage sert de point de rotation pour une composante de force exercée sur le châssis de l'appareil par l'outil de plongée (6) arrêté, cette force exerçant un couple sur l'élément élastique.

2. Appareil pour le travail du sol selon la revendication 1,
**caractérisé en ce que**
l'élément déformable élastiquement comprend un ressort, notamment un ressort hélicoïdal (15).

3. Appareil pour le travail du sol selon la revendication 2,
**caractérisé en ce que**
le ressort hélicoïdal est un ressort de compression (15), qui est notamment traversé par une tige de guidage (14) pouvant coulisser par rapport à une des parties (12, 16) proches des faces frontales du ressort.

4. Appareil pour le travail du sol selon une des revendications 1 à 3,
**caractérisé en ce que**
l'élément déformable élastiquement comprend un organe amortissemeur.

5. Appareil pour le travail du sol selon une des revendications 1 à 4,
**caractérisé en ce que**
l'organe de raccordement du bras oscillant supérieur ou de la barre d'attelage, qui est situé du côté de l'outil, d'une part est maintenu directement par l'intermédiaire d'un portique mobile (19) sur le châssis (2), et d'autre part s'appuie sur le châssis par l'intermédiaire de l'élément (15) déformable élastiquement intercalé.
